# EUROPEAN PATENT SPECIFICATION

(11) **EP 2 623 443 B1**
(45) Date of publication and mention of the grant of the patent: **11.03.2015**
(21) Application number: 13153513.0
(22) Date of filing: 31.01.2013
(51) Int. Cl.: B65G 53/46, B65G 65/48

(54) **Rotary valve**
Drehventil
Soupape rotative

(30) Priority: 01.02.2012 GB 201201785
(43) Date of publication of application: 07.08.2013
(73) Proprietor: ROTA-VAL LIMITED, Chippenham, Wiltshire SN14 6LH (GB)
(72) Inventor: Parkin, Stephen David, Chippenham, Wiltshire SN14 6LH (GB); Smith, Derek, Chippenham, Wiltshire SN14 6LH (GB)
(74) Representative: Greenwood, Matthew David

(56) References cited:
- EP-A1- 0 732 280
- DE-A1- 10 317 824
- GB-A- 1 027 493
- GB-A- 1 223 345

## Description

### FIELD OF THE INVENTION

The present invention relates to a rotary valve for conveying fluids.

### BACKGROUND

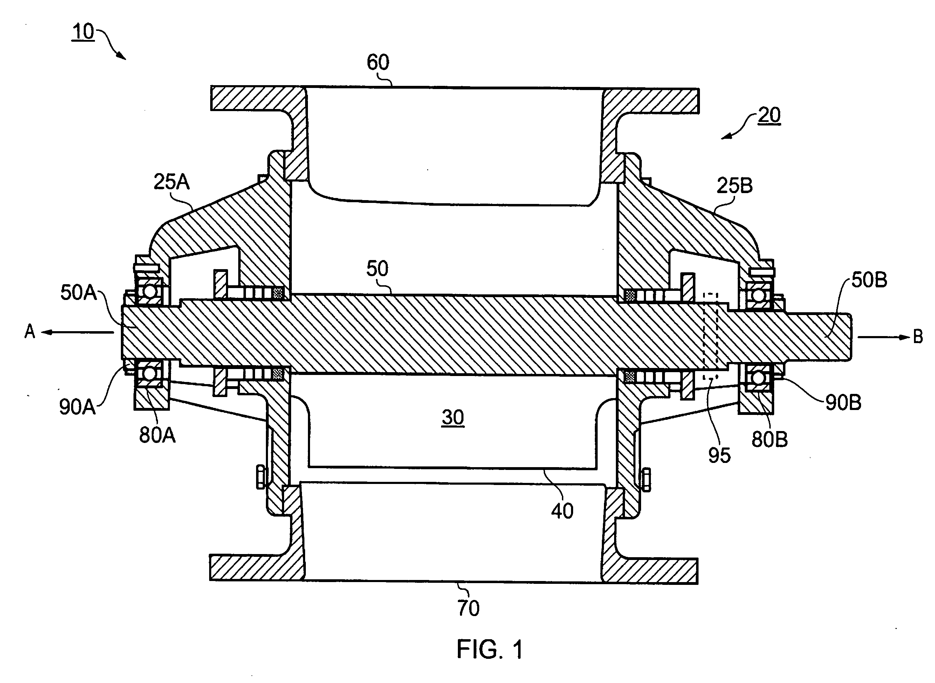

The document GB/223345 discloses a valve according to the preamble of claim 1. So does the valve of figure 1 of the present application.

Rotary valves are generally compact devices which are typically used for controlling the transfer of powders and granular products from one part of a storage or processing system to another. Typically, the transfer occurs with the assistance of a gas (commonly air) pressure differential. Rotary valves typically comprise a vaned rotor running at low speed, usually between 10 to 30 rpm, in a housing which has a product feed inlet at the top and outlet at the bottom. The valve can also be required to control the rate of product flow, and/or act as an explosion/flame barrier. To achieve any or all of the above functions the rotor/housing running clearances are maintained within close limits, which for most applications may be in the range of between 0.1 mm to 0.5mm. Although such rotary valves have many benefits, they each have their own shortcomings. Accordingly, it is desired to provide an improved rotary valve.

### SUMMARY

According to a first aspect, there is provided a rotary valve for conveying fluids, the rotary valve comprising: a casing; a drive shaft supported by the casing, the drive shaft having a drive shaft engagement mechanism; a rotor housed within the casing, the rotor having a rotor shaft supported by the casing, the rotor shaft having a rotor shaft engagement mechanism, the rotor shaft engagement mechanism being engagable with drive shaft engagement mechanism for axial connection and disconnection of the drive shaft with the rotor shaft; and a rotor adjustment mechanism operable to urge the rotor shaft and the drive shaft together during adjustment of an axial position of the rotor within the casing.

The first aspect recognises that a problem with existing rotary valve arrangements is that they can be difficult to maintain and adjust. Although mechanisms exist to enable the axial position of the rotor to be adjusted within the casing, for those rotary valves which aim to provide for easy removal of the rotor from within the casing and so have a separate drive shaft which slidingly engages with the rotor shaft to enable the rotor shaft to be slidingly disconnected from the drive shaft on removal of the rotor, those mechanisms would cause the rotor shaft and drive shaft to move away axially from each other during such axial adjustment. Such axial separation may result in the insecure axial retention of the rotor, thereby risking the rotor contacting with the casing within which it is retained. Also, insufficient engagement between the drive shaft and the rotor shaft may even lead to the complete separation of the drive shaft from the rotor shaft. This separation is due to the operation of the adjustment mechanism, which effectively would cause the drive shaft and the rotor shaft to be pulled away from each other through the casing during such adjustment.

According to the invention, a rotary valve is provided. The rotary valve is for conveying fluids. The rotary valve comprises a casing. A drive shaft is supported by the casing and the drive shaft has an engagement mechanism. A rotor is also provided within the casing. The rotor has a rotor shaft which is supported by the casing. The rotor shaft has also an engagement mechanism. The engagement mechanism of the rotor shaft and the drive shaft allow for coupling and decoupling of the rotor shaft with the drive shaft. A rotor adjustment mechanism is provided which urges together the rotor shaft and the drive shaft when the axial position of the rotor with respect to the casing is adjusted.

The adjustment mechanism urges or pushes together the drive shaft and the rotor shaft when the axial position of the rotor shaft is adjusted, rather than separating or pulling apart the drive shaft and the rotor shaft during such adjustment. Forcing the drive shaft and rotor shaft together ensures that the drive shaft and rotor are axially contained during such adjustment and ensures that adequate engagement between the drive shaft and rotor shaft is maintained to avoid the possibility of any inadvertent separation. This approach enables a rotary valve to be provided which can be easily serviced since the rotor can be disengaged from the drive shaft and removed from the casing, whilst also enabling rapid and reliable alignment of the rotor within the casing once assembled.

In one embodiment, the rotor adjustment mechanism is coupled with the casing. Accordingly, the adjustment mechanism may enable relative movement of the rotor shaft and the drive shaft with respect to the casing.

In one embodiment, the rotor adjustment mechanism is operable to displace the rotor shaft and the drive shaft towards each other axially during adjustment of the axial position of the rotor within the casing. Accordingly, the rotor shaft and the drive shaft may both be displaced towards each other during adjustment of the rotor, thereby preventing any separation.

In one embodiment, the rotor adjustment mechanism is operable to generate a force which displaces the rotor shaft and the drive shaft towards each other axially during adjustment of the axial position of the rotor within the casing. Accordingly, a force may be provided by the adjustment mechanism which causes the rotor shaft and drive shaft to displace towards each other during adjustment of the rotor to prevent separation.

In one embodiment, the rotor adjustment mechanism comprises a first adjuster coupled with the rotor shaft and a second adjuster coupled with the drive shaft. Accordingly, separate adjusters may be provided, one for axial adjustment caused by pushing on the rotor shaft and one for axial adjustment by pushing on the drive shaft.

In one embodiment, the first adjuster is located at a first side of the casing and the second adjuster is located away from the first side of the casing at a second side of the casing, the second side of the casing being axially opposite the first side of the casing. Accordingly, the adjusters may be located opposite each other to facilitate axial adjustment in opposite directions.

In one embodiment, the first adjuster acts to generate a first force to axially displace the rotor within the casing towards the drive shaft. Accordingly, the first adjuster may axially displace the rotor towards the drive shaft, thereby preventing separation of the two shafts.

In one embodiment, the first adjuster acts to bear against the rotor shaft to axially displace the rotor shaft towards the drive shaft.

In one embodiment, the first adjuster acts to bear against a shoulder of the rotor shaft to axially displace the rotor shaft towards the drive shaft. Accordingly, the adjuster may act upon a part of the shaft to provide the required axial displacement.

In one embodiment, the first adjuster comprises a screw mechanism engaging with the casing and the rotor shaft, the screw mechanism acting to generate the first force to axially displace the rotor shaft within the casing against the drive shaft. It will be appreciated that a screw mechanism is a particularly simple and effective technique for displacing the rotor shaft against the drive shaft.

In one embodiment, the screw mechanism comprises a screwable member having a thread which engages with a complimentary thread provided on the casing, the screwable member bearing against a shoulder of the rotor shaft during tightening to axially displace the rotor shaft against the drive shaft.

In one embodiment, the second adjuster acts to generate a second force to axially displace the rotor within the casing towards the rotor shaft.

In one embodiment, the second adjuster acts to bear against the drive shaft to axially displace the drive shaft towards the rotor shaft.

In one embodiment, the second adjuster acts to bear against a shoulder of the drive shaft to axially displace the drive shaft towards the rotor shaft.

In one embodiment, the second adjuster comprises a screw mechanism engaging with the casing and the drive shaft, the screw mechanism acting to generate the second force to axially displace the drive shaft within the casing against the rotor shaft.

In one embodiment, the screw mechanism comprises a screwable member having a thread which engages with a complimentary thread provided on the casing, the screwable member bearing against a shoulder of the drive shaft during tightening to axially displace the rotor shaft against the rotor shaft.

In one embodiment, the first force and the second force are axially opposed. Accordingly, the forces may operate in opposing directions along the axis of the rotor shaft and drive shaft.

In one embodiment, the rotary valve comprises a rotor removal mechanism operable to remove the rotor from within the casing by axial displacement of the rotor away from the drive shaft. Accordingly, a mechanism may be provided to facilitate the removal of the rotor from within the casing by displacing the rotor axially away from the drive shaft.

In one embodiment, the casing comprises a first part housing the rotor and the first adjuster and a second part housing the drive shaft and the second adjuster, the rotor removal mechanism being operable to axially displace the first part away from the second part to expose the rotor. Accordingly, the rotary valve may be split into two parts when removing the rotor. The first part of the casing may retain the rotor and first adjuster and the second part may retain the drive shaft and second adjuster. Separating the casing in this way removes the need to completely disassemble the rotary valve when servicing or inspecting the rotor which reduces the time taken to disassemble and reassemble the rotary valve.

Further particular and preferred aspects of the present invention are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

The present invention will be described further, by way of example only, with reference to preferred embodiments thereof as illustrated in the accompanying drawings, in which:
Figure 1 illustrates a rotary valve; and
Figure 2 illustrates a rotary valve according to one embodiment.

### DESCRIPTION OF THE EMBODIMENTS

### Overview

Before describing embodiments in any further detail, first an overview will be provided. Embodiments provide a rotary valve for conveying fluids in which the rotor shaft is releasably engagable with a drive shaft to enable the rotor to be conveniently removed for inspection or maintenance. Having a rotor shaft which is dis engagable with the drive shaft enables the rotor shaft to be axially displaced away from the drive shaft for removal of the rotor without needing to disassemble any drive mechanism, which may otherwise be required if the drive mechanism was connected directly to the rotor shaft. However, a problem with having a drive shaft and rotor shaft which are separable is that existing mechanisms for adjusting the axial position of the rotor within the casing of the rotary valve may lead to the drive shaft and rotor shaft failing to engage properly.

### Shaft Separation

To better understand the problem of drive shaft and rotor shaft separation, Figure 1 illustrates an existing rotary valve, generally 10. The rotary valve 10 has a casing 20 which receives a rotor 30. The rotor 30 has a number of fins 40 which extend radially from a rotor shaft 50. The fins 40 rotate about the rotor shaft 50 to convey fluid, such as a liquid or powder, from an inlet 60 to an outlet 70 during rotation of the rotor 30 within the casing 20.

The rotor shaft 50 is supported within the casing 20 by bearings 80a, 80b. The bearing 80a is provided in a first end plate 25a and the bearing 80b is provided in a second end plate 25b. At a first end 50a of the rotor shaft 50 is provided a nut 90a which engages with a thread provided on the outer surface of the first end 50a. Similarly, at a second end 50b of the rotor shaft 50 is provided a nut 90b which engages with a thread provided on the outer surface of the second end 50b.

When it is desired to adjust the axial position of the rotor 30 within the casing 20 then the nuts 90a, 90b are adjusted. In particular, when it is desired to adjust the axial position of the rotor 30 in the direction A, it is necessary to untighten the nut 90b and to tighten the nut 90a. Conversely, when it is desired to adjust the axial position of the rotor 30 in the direction B, then it is necessary to untighten the nut 90a and to tighten the nut 90b.

Although this approach is adequate for rotor shafts which are directly coupled with a drive mechanism (such as being directly coupled with a drive mechanism (not shown) which engages with the second end 50b), the problem with such direct connection with the drive mechanism is that the drive mechanism must be disconnected in order to enable the rotor 30 to be removed from the casing 20 by removing the end plate 25a and sliding the rotor shaft 30 out of the bearing 80b in the direction A.

It can be seen that if the rotor shaft 50 is instead separable in the region 95 (by providing a separate rotor shaft which is releasably engagable axially with a separate drive shaft fulfilling the function of the second end 50b), then manipulation of the nuts 90a, 90b in the manner described above in order to adjust the axial position of the rotor 30 may cause the rotor shaft and drive shaft to become inadequately connected. In particular, should it be desired to move the rotor 30 in the direction B, then the action of loosening the nut 90a and tightening the nut 90b will cause the rotor shaft to remain static whilst the drive shaft moves in the direction B, which may result in inadequate connection between the rotor shaft and drive shaft. Likewise, should it be desired to move the rotor in the direction A, then loosening the nut 90b and tightening the nut 90a will result in the rotor 30 moving in the direction A whilst the drive shaft remains static.

Hence, adjustment of the position of the rotor using the mechanism described above would result in the parts of a two part shaft separating.

Accordingly, a revised arrangement is provided whereby the adjustment mechanism used to adjust the axial position of the rotor does so by urging the drive shaft and rotor shaft together during any axial adjustment of the rotor.

### Revised Adjustment Mechanism

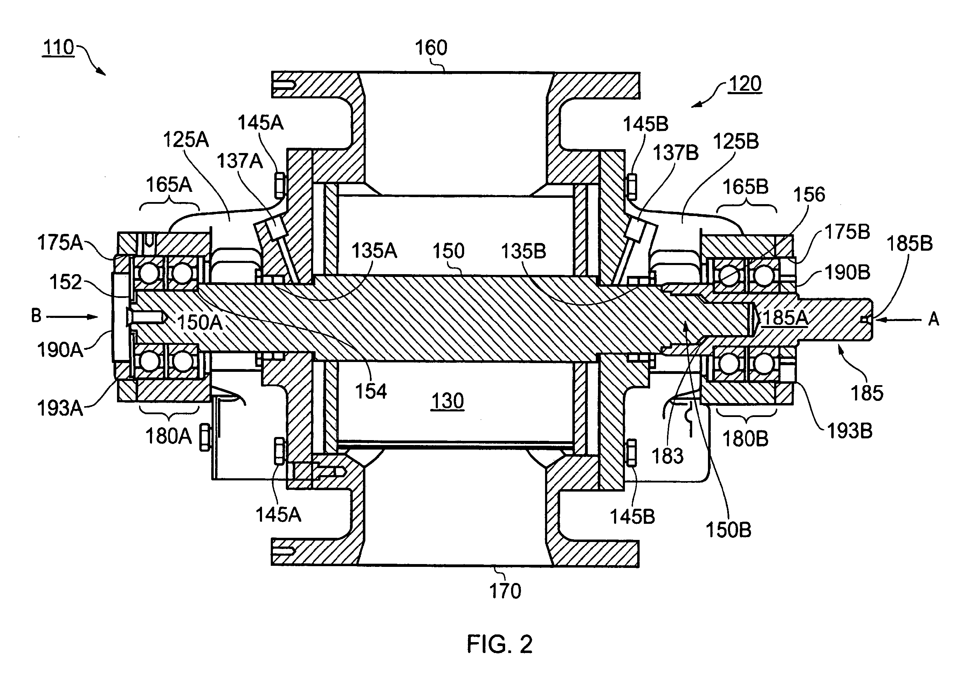

Figure 2 illustrates a rotary valve, generally 110, according to one embodiment. The rotary valve 110 has a casing 120 which houses a rotor 130 which rotates to convey fluid, such as a liquid or powder, between an inlet 160 and an outlet 170.

The rotor 130 has a rotor shaft 150 which is supported by bearing assemblies 180a, 180b provided within respective casing end plates 125a, 125b. The rotor shaft 150 has a first end 150a which is supported by the bearing assembly 180a and a second end 150b which is received within an aperture 183 provided at one end 185a of a drive shaft 185. Coupled at another end 185b of the drive shaft 185 is a drive mechanism (not shown) which operates to rotate the drive shaft 185.

The drive shaft 185 is supported by the bearing assembly 180b provided in the end plate 125b of the casing 120. The outer surface of the end 150b of the rotor 150 is shaped to cooperate with a corresponding shape of the aperture 183 in order to transmit torque between the drive shaft 185 and the rotor shaft 150. In particular, the outer surface of the end 150b of the rotor shaft 150 may be splined, square, keyed or engaged in some other way in order to engage with a complementary shaped surface of the aperture 183. Such an arrangement enables the rotor shaft 150 to slidingly engage and disengage with the drive shaft 185 to facilitate the removal of the rotor 130 from within the casing 120.

In particular, bolts 145a may be removed to free the end plate 125a from the remainder of the casing 120. This enables the end plate 125a complete with the bearing assembly 180a and the rotor 130 to be removed through axial movement in the direction A. This causes the rotor shaft 150 to disengage from the drive shaft 185 in the axial direction A to enable the rotor 130 to be removed from the casing 120.

Typically, the end plate 125 is coupled with a pair of rails (not shown) which slidingly engage with the casing 120 in order to facilitate the removal and replacement of the end plate 125a, together with the bearing assembly 180a and the rotor 130. The rails ensure the axial alignment of the parts during disassembly.

A cylindrical portion 165a, 165b extends from a respective end plate 125a, 125b which receives a respective bearing assembly 180a, 180b on a radially inner surface of the cylindrical portions 165a, 165b. The bearing assemblies 180a, 180b support the end 150a of the rotor shaft 150 and the end 185a of the drive shaft 185, respectively.

A portion of the radially inner surface of the cylindrical protrusions 165a, 165b at the axially outermost ends is provided with a screw thread 175a, 175b. Annular rings 190a, 190b are provided which are provided with a corresponding screw thread on their radially outermost surface 193a, 193b. The screw thread 193a of the annular ring 190a engages with the screw thread 175a of the cylindrical protrusion 165a. Likewise, the screw thread 193b of the annular ring 190b engages with the screw thread 175b of the cylindrical protrusion 165b.

The provision of the annular rings 190a, 190b axially retain the bearing assemblies 180a, 180b, the rotor 130 and the drive shaft 185 within the casing 120 when in the assembled configuration shown in Figure 2. In particular, the annular ring 190a abuts against a shoulder 152 and against the bearing assembly 180a which, in turn, also abuts against a shoulder 154 of the rotor shaft 150 which limits movement of the rotor shaft 150 in the direction A. Likewise, the annular ring 190b abuts against the bearing assembly 180b which, in turn, abuts against a shoulder 156 of the drive shaft 185 which limits movement of the drive shaft 185 in the axial direction B. The outer surface of the end 150b of the rotor shaft 150 abuts against the aperture 183 of the drive shaft 185 which also limits movement of the rotor 130 in the direction B.

Seals 135a, 135b are provided on the end plates 125a, 125b respectively. Air purge channels 137a, 137b are also provided to facilitate air purging between the end plates 125a, 125b and the rotor shaft 150.

### Rotor adjustment

In order to adjust the axial position of the rotor, the annular rings 190a, 190b are manipulated. In particular, in order to move the rotor 130 in the axial direction B, the annular ring 190b is loosened (that is, the annular ring 190b is rotated in a direction which displaces the annular ring 190b in the direction B). The rotation of the annular ring 190b would not normally cause any significant movement of any other component of the rotary valve 110. Next, the annular ring 190a is rotated in a direction which causes the annular ring 190a to move in the direction B. This movement in the direction B applies a force to the shoulder 152, and to the shoulder 154 via the bearing assembly 180. This in turn causes the rotor 130 to move in the direction B and urges the end 150b of the rotor shaft 150 against the aperture 183 of the drive shaft 185. This movement is accommodated by the space made as a result of the initial manipulation of the annular ring 190b in the direction B. Once sufficient axial movement of the rotor 130 in the direction B has been achieved, it may be necessary to tighten the annular ring 190b in order to prevent any further displacement of the drive shaft 185 or the rotor 130 in the direction B. Accordingly, it can be seen that the adjustment of the axial position of the rotor 130 in the axial direction B can be effected in a way which causes the rotor shaft 150 and the drive shaft 185 to be pushed together rather than separated during such axial adjustment.

In order to adjust the location of the rotor 130 in the axial direction A, the annular ring 190a is first manipulated to cause the annular ring 190a to move in the axial direction A. It will be appreciated that such axial movement of the annular ring 190a will not normally result in movement of other components of the rotary valve 110. In order to move the rotor 130 in the direction A, the annular ring 190b is manipulated to cause the annular ring 190b to move in the direction A. Such movement causes the annular ring 190b to abut against the bearing assembly 180b which, in turn, abuts against the shoulder 156 of the drive shaft 185 and causes the drive shaft 185 to move correspondingly in the axial direction A. Movement of the drive shaft 185 in the axial direction A causes the drive shaft 185 and the rotor shaft 150 to be urged together. The engagement between the end 150b of the rotor shaft 150 and the inner surface 183 of the drive shaft 185 causes the rotor 130 to move in the direction A. Such movement in the direction A also causes the shoulder 154 of the rotor shaft 150 to bear against the bearings 180a which are displaced in the axial direction A. This movement is accommodated by the space made as a result of the initial manipulation of the annular ring 190a in the direction A. Once the correct axial position of the rotor 130 in the direction A has been achieved, then the annular ring 190a is re-tightened in order to prevent any further movement of the drive shaft 185, the bearings 180b, the rotor shaft 150 or the bearings 180a in the direction A. Hence, it can be seen that adjustment of the axial position of the rotor 130 in the direction A can be effected in a way which causes the drive shaft 185 and the rotor shaft 150 to be urged together rather than separated.

Although this embodiment shows axial adjustment using a screw thread mechanism, it will be appreciated that, as such, axial adjustment may be effected using other mechanisms such as, for example, hydraulic adjustment, pneumatic adjustment, cam adjustment or other mechanical adjustment.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims and their equivalents.

## Claims

1. A rotary valve (110) for conveying fluids, said rotary valve (110) comprising:
a casing (120);
a drive shaft (185) supported by said casing (120), said drive shaft (185) having a drive shaft engagement mechanism (185A); and
a rotor (130) housed within said casing (120), said rotor (130) having a rotor shaft (150) supported by said casing (120), said rotor shaft (150) having a rotor shaft engagement mechanism (150B), said rotor shaft (150) engagement mechanism (150B) being engagable with drive shaft engagement mechanism (185A) for axial connection and disconnection of said drive shaft (185) with said rotor shaft (150); **characterized in that** the valve (110) comprises
a rotor adjustment mechanism (190A, 190B) operable to urge said rotor shaft (150) and said drive shaft (185) together during adjustment of an axial position of said rotor (130) within said casing (120).

2. The rotary valve (110) as claimed in claim 1, wherein said rotor adjustment mechanism (190A, 190B) is coupled with said casing (120).

3. The rotary valve (110) as claimed in claim 1 or 2, wherein said rotor adjustment mechanism (190A, 190B) is operable to displace said rotor shaft (150) and said drive shaft (185) towards each other axially during adjustment of said axial position of said rotor (130) within said casing (120).

4. The rotary valve (110) as claimed in any preceding claim, wherein said rotor adjustment mechanism (190A, 190B) is operable to generate a force which displaces said rotor shaft (150) and said drive shaft (185) towards each other axially during adjustment of said axial position of said rotor (130) within said casing (120).

5. The rotary valve (110) as claimed in any preceding claim, wherein said rotor adjustment mechanism (190A, 190B) comprises a first adjuster (190A) coupled with said rotor shaft (150) and a second adjuster (190B) coupled with said drive shaft (185).

6. The rotary valve (110) as claimed in claim 5, wherein said first adjuster (190A) is located at a first side of said casing (120) and said second adjuster (190B) is located away from said first side of said casing (120) at a second side of said casing (120), said second side of said casing (120) being axially opposite said first side of said casing (120).

7. The rotary valve (110) as claimed in claim 5 or 6, wherein said first adjuster (190A) acts to generate a first force to axially displace said rotor (130) within said casing (120) towards said drive shaft (185).

8. The rotary valve (110) as claimed in any one of claims 5 to 7, wherein said first adjuster (190A) acts to bear against said rotor shaft (150) to axially displace said rotor shaft (150) towards said drive shaft (185).

9. The rotary valve as claimed in any one of claims 5 to 8, wherein said first adjuster (190A) acts to bear against a shoulder (154) of said rotor shaft (150) to axially displace said rotor shaft (150) towards said drive shaft (185).

10. The rotary valve (110) as claimed in any one of claims 5 to 9, wherein said first adjuster (190A) comprises a screw mechanism (175A, 190A) engaging with said casing (120) and said rotor shaft, said screw mechanism (175A, 190A) acting to generate said first force to axially displace said rotor shaft (150) within said casing (120) against said drive shaft (185),
wherein said screw mechanism (175A, 190A) comprises a screwable member (190A) having a thread which engages with a complimentary thread (175A) provided on said casing (120), said screwable member (190A) bearing against a shoulder (154) of said rotor shaft (150) during tightening to axially displace said rotor shaft (150) against said drive shaft (185).

11. The rotary valve (110) as claimed in any one of claims 5 to 10, wherein said second adjuster (190B) acts to generate a second force to axially displace said rotor (130) within said casing (120) towards said rotor shaft (150), and/or
acts to bear against said drive shaft (185) to axially displace said drive shaft (185) towards said rotor shaft (150), and/or
acts to bear against a shoulder (156) of said drive shaft (185) to axially displace said drive shaft (185) towards said rotor shaft (150), and/or
comprises a second screw mechanism (175B, 190B) engaging with said casing (120) and said drive shaft (185), said screw mechanism (175B, 190B) acting to generate said second force to axially displace said drive shaft (185) within said casing (120) against said rotor shaft (150).

12. The rotary valve (110) as claimed in claim 11, wherein said second screw mechanism (175B, 190B) comprises a screwable member (190B) having a thread which engages with a complimentary thread (175B) provided on said casing (120), said screwable member (190B) bearing against a shoulder (156) of said drive shaft (185) during tightening to axially displace said drive shaft (185) against said rotor shaft (150).

13. The rotary valve (110) as claimed in any one of claims 7 to 12, wherein said first force and said second force are axially opposed.

14. The rotary valve (110) as claimed in any preceding claim, comprising a rotor removal mechanism (145) operable to remove said rotor (130) from within said casing (120) by axial displacement of said rotor (130) away from said drive shaft (185).

15. The rotary valve (110) of claim 14, wherein said casing (120) comprises a first part (125A) housing said rotor (130) and said first adjuster (190A) and a second part (125B) housing said drive shaft (185) and said second adjuster (190B), said rotor removal mechanism (145) being operable to axially displace said first part (125A) away from said second part (125B) to expose said rotor (130).

## Patentansprüche

1. Drehventil (110) zum Transportieren von Fluiden, wobei das Drehventil (110) aufweist:
ein Gehäuse (120);
eine Antriebswelle (185), die von dem Gehäuse (120) gehalten wird, wobei die Antriebswelle (185) einen Antriebswellen-Eingreifmechanismus (185A) hat; und
einen Rotor (130), der in dem Gehäuse (120) untergebracht ist, wobei der Rotor (130) eine Rotorwelle (150) hat, die von dem Gehäuse (120) gehalten wird, wobei die Rotorwelle (150) einen Rotorwellen-Eingreifmechanismus (150B) hat, wobei der Rotorwellen-Eingreifmechanismus (150B) für die axiale Verbindung der Antriebswelle (185) mit der Rotorwelle (150) und die Trennung davon mit dem Antriebswellen-Eingreifmechanismus (185A) in Eingriff bringbar ist,
**dadurch gekennzeichnet, dass** das Ventil (110) aufweist:
einen Rotoreinstellmechanismus (190A, 190B), der betriebsfähig ist, um die Rotorwelle (150) und die Antriebswelle (185) während der Einstellung einer axialen Position des Rotors (130) innerhalb des Gehäuses (120) zusammen zu drücken.

2. Drehventil (110) nach Anspruch 1, wobei der Rotoreinstellmechanismus (190A, 190B) mit dem Gehäuse (120) gekoppelt ist.

3. Drehventil (110) nach Anspruch 1 oder 2, wobei der Rotoreinstellmechanismus (190A, 190B) betriebsfähig ist, um die Rotorwelle (150) und die Antriebswelle (185) während der Einstellung der axialen Position des Rotors (130) innerhalb des Gehäuses (120) aufeinander zu anzutreiben.

4. Drehventil (110) nach jedem vorhergehenden Anspruch, wobei der Rotoreinstellmechanismus (190A, 190B) betriebsfähig ist, um eine Kraft zu erzeugen, die die Rotorwelle (150) und die Antriebswelle (185) während der Einstellung der axialen Position des Rotors (130) innerhalb des Gehäuses (120) aufeinander zu verschiebt.

5. Drehventil (110) nach jedem vorhergehenden Anspruch, wobei der Rotoreinstellmechanismus (190A, 190B) eine erste Einstelleinrichtung (190A), die mit der Rotorwelle (150) gekoppelt ist, und eine zweite Einstelleinrichtung (190B), die mit der Antriebswelle (185) gekoppelt ist, aufweist.

6. Drehventil (110) nach Anspruch 5, wobei die erste Einstelleimichtung (190A) an einer ersten Seite des Gehäuses (120) angeordnet ist und die zweite Einstelleinrichtung (190B) weg von der ersten Seite des Gehäuses (120) an einer zweiten Seite des Gehäuses (120) angeordnet ist, wobei die zweite Seite des Gehäuses (120) axial entgegengesetzt zu der ersten Seite des Gehäuses (120) ist.

7. Drehventil (110) nach Anspruch 5 oder 6, wobei die erste Einstelleinrichtung (190A) wirkt, um eine erste Kraft zu erzeugen, um den Rotor (130) innerhalb des Gehäuses (120) in Richtung der Antriebswelle (185) axial zu verschieben.

8. Drehventil (110) nach einem der Ansprüche 5 bis 7, wobei die erste Einstelleinrichtung wirkt, um an der Rotorwelle (150) anzuliegen, um die Rotorwelle (150) in Richtung der Antriebswelle (185) axial zu verschieben.

9. Drehventil (110) nach einem der Ansprüche 5 bis 8, wobei die erste Einstelleinrichtung (190A) wirkt, um an einem Absatz (154) der Rotorwelle (150) anzuliegen, um die Rotorwelle (150) in Richtung der Antriebswelle (185) axial zu verschieben.

10. Drehventil (110) nach einem der Ansprüche 5 bis 9, wobei die erste Einstelleinrichtung (190A) einen Schraubmechanismus (175A, 190A) aufweist, der mit dem Gehäuse (120) und der Rotorwelle eingreift, wobei der Schraubmechanismus (175A, 190A) wirkt, um eine erste Kraft zu erzeugen, um die Rotorwelle (150) innerhalb des Gehäuses (120) gegen die Antriebswelle (185) axial zu verschieben,
wobei der Schraubmechanismus (175, 190A) ein schraubbares Element (190A) mit einem Gewinde aufweist, das mit einem komplementären Gewinde (175A), das auf dem Gehäuse (120) bereitgestellt ist, eingreift, wobei das schraubbare Element (190A) während des Festziehens, um die Rotorwelle (150) gegen die Antriebswelle (185) axial zu verschieben, an einem Absatz (154) der Rotorwelle (150) anliegt.

11. Drehventil (110) nach einem der Ansprüche 5 bis 10, wobei die zweite Einstelleinrichtung (190B) wirkt, um eine zweite Kraft zu erzeugen, um den Rotor (130) innerhalb des Gehäuses (120) in Richtung der Rotorwelle (150) axial zu verschieben, und/oder
wirkt, um an der Antriebswelle (185) anzuliegen, um die Antriebswelle (185) in Richtung der Rotorwelle (150) axial zu verschieben, und/oder einen zweiten Schraubmechanismus (175B, 190B) aufweist, der mit dem Gehäuse (120) und der Antriebswelle (185) eingreift, wobei der Schraubmechanismus (175B, 190B) wirkt, um die zweite Kraft zu erzeugen, um die Antriebswelle (185) innerhalb des Gehäuses (120) gegen die Rotorwelle (150) axial zu verschieben.

12. Drehwelle (110) nach Anspruch 11, wobei der zweite Schraubmechanismus (175B, 190B) ein schraubbares Element (190B) mit einem Gewinde aufweist, das mit einem komplementären Gewinde (175B) eingreift, das auf dem Gehäuse (120) bereitgestellt ist, wobei das schraubbare Element (190B) während des Festziehens, um die Antriebswelle (185) gegen die Rotorwelle (150) axial zu verschieben, an einem Absatz (156) der Antriebswelle (185) anliegt.

13. Drehventil (110) nach einem der Ansprüche 7 bis 12, wobei die erste Kraft und die zweite Kraft axial entgegengesetzt sind.

14. Drehventil (110) nach jedem vorhergehenden Ansprüche, das einen Rotorentfernungsmechanismus (145) aufweist, der betriebsfähig ist, um den Rotor (130) durch axiales Verschieben des Rotors (130) weg von der Antriebswelle (185) aus dem Gehäuse (120) zu entfernen.

15. Drehventil (110) nach Anspruch 14, wobei das Gehäuse (120) einen ersten Teil (125A), der den Rotor (130) und die Einstelleinrichtung (190A) aufnimmt, und einen zweiten Teil (125B), der die Antriebswelle (185) und die zweite Einstelleinrichtung (190B) aufnimmt, aufweist, wobei der Rotorentfernungsmechanismus (145) betriebsfähig ist, um den ersten Teil (125A) weg von dem zweiten Teil (125B) axial zu verschieben, um den Rotor (130) freizulegen.

## Revendications

1. Vanne rotative (110) destinée à transporter des fluides, ladite vanne rotative (110) comprenant :
un corps (120),
un arbre d'entraînement (185) supporté par ledit corps (120), ledit arbre d'entraînement (185) ayant un mécanisme d'engagement d'arbre d'entraînement (185A), et
un rotor (130) reçu dans ledit corps (120), ledit rotor (130) ayant un arbre de rotor (150) supporté par ledit corps (120), ledit arbre de rotor (150) ayant un mécanisme d'engagement d'arbre de rotor (150B), ledit mécanisme d'engagement (150B) d'arbre de rotor (150) pouvant s'engager avec le mécanisme d'engagement arbre d'entraînement (185A) pour une connexion et une déconnexion axiales dudit arbre d'entraînement (185) par rapport audit arbre de rotor (150), **caractérisée en ce que** la vanne (110) comprend
un mécanisme d'ajustement de rotor (190A, 190B) pouvant être mis en oeuvre pour pousser ledit arbre de rotor (150) et ledit arbre d'entraînement (185) ensemble au cours de l'ajustement d'une position axiale dudit rotor (130) dans ledit corps (120).

2. Vanne rotative (110) selon la revendication 1, dans laquelle ledit mécanisme d'ajustement de rotor (190A, 190B) est couplé audit corps (120).

3. Vanne rotative (110) selon la revendication 1 ou 2, dans laquelle ledit mécanisme d'ajustement de rotor (190A, 190B) peut être mis en oeuvre pour déplacer ledit arbre de rotor (150) et ledit arbre d'entraînement (185) l'un vers l'autre axialement au cours de l'ajustement de ladite position axiale dudit rotor (130) dans ledit corps (120).

4. Vanne rotative (110) selon l'une quelconque des revendications précédentes, dans laquelle ledit mécanisme d'ajustement de rotor (190A, 190B) peut être mis en oeuvre pour générer une force qui déplace ledit arbre de rotor (150) et ledit arbre d'entraînement (185) l'un vers l'autre axialement au cours de l'ajustement de ladite position axiale dudit rotor (130) dans ledit corps (120).

5. Vanne rotative (110) selon l'une quelconque des revendications précédentes, dans laquelle ledit mécanisme d'ajustement de rotor (190A, 190B) comprend un premier élément d'ajustement (190A) couplé audit arbre de rotor (150) et un deuxième élément d'ajustement (190B) couplé audit arbre d'entraînement (185).

6. Vanne rotative (110) selon la revendication 5, dans laquelle ledit premier élément d'ajustement (190A) est situé d'un premier côté dudit corps (120) et ledit deuxième élément d'ajustement (190B) est situé à l'écart dudit premier côté dudit corps (120) au niveau d'un deuxième côté dudit corps (120), ledit deuxième côté dudit corps (120) étant axialement opposé audit premier côté dudit corps (120).

7. Vanne rotative (110) selon la revendication 5 ou 6, dans laquelle ledit premier élément d'ajustement (190A) agit pour générer une première force pour déplacer axialement ledit rotor (130) dans ledit corps (120) en direction dudit arbre d'entraînement (185).

8. Vanne rotative (110) selon l'une quelconque des revendications 5 à 7, dans laquelle ledit premier élément d'ajustement (190A) agit pour appuyer sur ledit arbre de rotor (150) pour déplacer axialement ledit arbre de rotor (150) en direction dudit arbre d'entraînement (185).

9. Vanne rotative selon l'une quelconque des revendications 5 à 8, dans laquelle ledit premier élément d'ajustement (190A) agit pour appuyer sur un épaulement (154) dudit arbre de rotor (150) pour déplacer axialement ledit arbre de rotor (150) en direction dudit arbre d'entraînement (185).

10. Vanne rotative (110) selon l'une quelconque des revendications 5 à 9, dans laquelle ledit premier élément d'ajustement (190A) comprend un mécanisme à vis (175A, 190A) qui s'engage avec ledit corps (120) et ledit arbre de rotor, ledit mécanisme à vis (175A, 190A) agissant pour générer ladite première force pour déplacer axialement ledit arbre de rotor (150) dans ledit corps (120) contre ledit arbre d'entraînement (185),
dans laquelle ledit mécanisme à vis (175A, 190A) comprend un élément pouvant être vissé (190A) ayant un filetage qui s'engage avec un filetage complémentaire (175A) prévu sur ledit corps (120), ledit élément pouvant être vissé (190A) appuyant sur un épaulement (154) dudit arbre de rotor (150) au cours d'un serrage pour déplacer axialement ledit arbre de rotor (150) contre ledit arbre d'entraînement (185).

11. Vanne rotative (110) selon l'une quelconque des revendications 5 à 10, dans laquelle ledit deuxième élément d'ajustement (190B) agit pour générer une deuxième force pour déplacer axialement ledit rotor (130) dans ledit corps (120) en direction dudit arbre de rotor (150), et/ou
agit pour appuyer sur ledit arbre d'entraînement (185) pour déplacer axialement ledit arbre d'entraînement (185) en direction dudit arbre de rotor (150), et/ou
agit pour appuyer sur un épaulement (156) dudit arbre d'entraînement (185) pour déplacer axialement ledit arbre d'entraînement (185) en direction dudit arbre de rotor (150), et/ou
comprend un deuxième mécanisme à vis (175B, 190B) s'engageant avec ledit corps (120) et ledit arbre d'entraînement (185), ledit mécanisme à vis (175B, 190B) agissant pour générer ladite deuxième force pour déplacer axialement ledit arbre d'entraînement (185) dans ledit corps (120) contre ledit arbre de rotor (150).

12. Vanne rotative (110) selon la revendication 11, dans laquelle ledit deuxième mécanisme à vis (175B, 190B) comprend un élément pouvant être vissé (190B) ayant un filetage qui s'engage avec un filetage complémentaire (175B) prévu sur ledit corps (120), ledit élément pouvant être vissé (190B) appuyant sur un épaulement (156) dudit arbre d'entraînement (185) au cours d'un serrage pour déplacer axialement ledit arbre d'entraînement (185) contre ledit arbre de rotor (150).

13. Vanne rotative (110) selon l'une quelconque des revendications 7 à 12, dans laquelle ladite première force et ladite deuxième force sont opposées axialement.

14. Vanne rotative (110) selon l'une quelconque des revendications précédentes, comprenant un mécanisme de retrait de rotor (145) pouvant être mis en oeuvre pour un retrait dudit rotor (130) à partir dudit corps (120) par un déplacement axial dudit rotor (130) s'écartant dudit arbre d'entraînement (185).

15. Vanne rotative (110) selon la revendication 14, dans laquelle ledit corps (120) comprend une première partie (125A) recevant ledit rotor (130) et ledit premier élément d'ajustement (190A) et une deuxième partie (125B) recevant ledit arbre d'entraînement (185) et ledit deuxième élément d'ajustement (190B), ledit mécanisme de retrait de rotor (145) pouvant être mis en oeuvre pour déplacer axialement ladite première partie (125A) par rapport à ladite deuxième partie (125B) pour exposer ledit rotor (130).
